# EUROPÄISCHE PATENTSCHRIFT

(11) **EP 4 045 857 B1**
(45) Veröffentlichungstag und Bekanntmachung des Hinweises auf die Patenterteilung: **01.01.2025**
(21) Anmeldenummer: 20780662.1
(22) Anmeldetag: 24.09.2020
(51) Int. Cl.: F25D 23/00, F25D 23/06, F25D 23/08, F25D 29/00

(54) **HAUSHALTSKÄLTEGERÄTEVORRICHTUNG**
HOUSEHOLD REFRIGERATING DEVICE
DISPOSITIF D'APPAREIL FRIGORIFIQUE DOMESTIQUE

(30) Priorität: 18.10.2019 DE 102019216094
(43) Veröffentlichungstag der Anmeldung: 24.08.2022
(73) Patentinhaber: BSH Hausgeräte GmbH, 81739 München (DE)
(72) Erfinder: KRAPP, Michael, 89564 Nattheim (DE); RUPPERT, Alexander, 89250 Senden (DE); SCHIFFNER, Dominik, 89547 Gerstetten (DE)
(86) Internationale Anmeldenummer: PCT/EP2020/076725
(87) Internationale Veröffentlichungsnummer: WO 2021/073849

(56) Entgegenhaltungen:
- WO-A1-95/08087
- DE-A1- 102010 002 043
- TW-A- 201 228 900
- US-A- 4 580 852
- US-A1- 2002 124 590
- US-A1- 2005 217 301

## Beschreibung

Die Erfindung betrifft eine Haushaltskältegerätevorrichtung nach Anspruch 1 und ein Verfahren zur Montage einer Haushaltskältegerätevorrichtung nach Anspruch 11.

Aus dem Stand der Technik ist bereits ein Haushaltskältegerät bekannt, welches ein Seitenwandbauteil und eine Maschinenraumdeckwandung aufweist. Die Maschinenraumdeckwandung ist als eine doppelseitig beschichtete Bodenpappe ausgebildet und begrenzt zumindest teilweise einen Isolationsraum. Der Isolationsraum wird bei der Montage mit einem Isolationsschaum gefüllt. Das Haushaltskältegerät weist zwei Seitenwandbauteile sowie eine Schäumtraverse auf, welche beidseitig in jeweils einer der Seitenwandbauteile verschraubt ist und flächig hinter der, ansonsten im Wesentlichen biegsamen Maschinenraumdeckwandung angeordnet ist. Aus Stabilitätsgründen sowie um notwendige Schaumdichtheit bereitzustellen, wird die Schäumtraverse mit der Maschinenraumdeckwandung verklebt.

Die TW 201 228 900 A offenbart ein wärmeisolierendes Gehäuse, umfassend ein Vakuumisolationspanel und Wärmeisolationsschaum.

Die US 2005/217301 A1 offenbart ein Kältegerät mit einem Maschinenraum, der unterhalb eines Lagerraumes angeordnet ist.

Die WO 95/08087 A1 offenbart ein Kältegerät mit einem Korpus, wobei der Korpus einen gekühlten Raum definiert, wobei der gekühlte Raum oberhalb einer Position für eine Kühlvorrichtung angeordnet ist.

Weitere relevante Dokumente aus dem Stand der Technik sind US2002/124590A1, DE102010002043A1 und US4580852A.

Die Aufgabe der Erfindung besteht insbesondere, aber nicht beschränkt darauf, darin, eine gattungsgemäße Vorrichtung mit verbesserten Eigenschaften hinsichtlich einer Montage unter Einhaltung einschlägiger Brandschutzvorschriften bereitzustellen. Die Aufgabe wird erfindungsgemäß durch die Merkmale der Ansprüche 1 und 11 gelöst, während vorteilhafte Ausgestaltungen und Weiterbildungen der Erfindung den Unteransprüchen entnommen werden können.

Die Erfindung geht aus von einer Haushaltskältegerätevorrichtung mit zumindest einem Seitenwandbauteil und mit zumindest einer Maschinenraumdeckwandung.

Es wird vorgeschlagen, dass die Haushaltskältegerätevorrichtung zumindest ein Dichtelement aufweist, welches zumindest einen Bereich zwischen dem Seitenwandbauteil und der Maschinenraumdeckwandung abdichtet.

Durch eine derartige Ausgestaltung kann insbesondere eine gattungsgemäße Vorrichtung vorteilhaft weiterentwickelt werden, insbesondere hinsichtlich einer Montage, und zwar insbesondere im Hinblick auf eine Sicherheit für einen Bediener und/oder im Hinblick auf eine Einhaltung einschlägiger Vorschriften, insbesondere Brandschutzvorschriften, insbesondere die Anforderungen der IEC 60335-2-24. Insbesondere kann ein normgerechtes Haushaltskältegerät bereitgestellt werden. Insbesondere kann zumindest eine Norm kosteneffizient eingehalten werden. Es kann insbesondere auf die aufwendige Montage einer Schäumtraverse verzichtet werden. Insbesondere kann auf eine Schäumtraverse verzichtet werden, da die Maschinenraumdeckwandung insbesondere die Funktion hinsichtlich Stabilität und Schaumdichtheit, welche bisher durch eine Schäumtraverse bereitgestellt wurde, übernehmen kann. Insbesondere kann das Seitenwandbauteil als ein kosteneffizientes Kunststoffspritzgussteil ausgebildet sein. Es kann insbesondere auf eine Ausbildung des Seitenwandbauteils aus einem hochwertigeren und/oder feuerfesten Material verzichtet werden, wodurch insbesondere geringe Kosten und/oder eine vorteilhaft wirtschaftliche Ausgestaltung erzielt werden kann. Insbesondere kann eine einfache und/oder schnelle Montage der Maschinenraumdeckwandung an dem Seitenwandbauteil und/oder einer Seitenwand ermöglicht werden. Insbesondere kann durch das Dichtelement ein insbesondere automatisierter Montageprozess ermöglicht werden. Vorteilhaft kann das Dichtelement etwaige Fertigungstoleranzen, insbesondere im Hinblick auf den automatisierten Montageprozess, ausgleichen. Hierdurch können insbesondere geringe Montagezeiten und/oder geringe Personalkosten erzielt werden. Vorteilhaft kann durch die erfindungsgemäße Ausgestaltung während einer Montage auf eine zusätzliche Fixierung der Maschinenraumdeckwandung an dem Seitenwandbauteil und/oder einer Seitenwand verzichtet werden. Insbesondere kann durch die erfindungsgemäße Ausgestaltung eine verbesserte Dichtwirkung, insbesondere bei einer Ausschäumung eines Isolierraums, erzielt werden.

Unter einer "Haushaltskältegerätevorrichtung" soll insbesondere zumindest ein Teil, insbesondere eine Unterbaugruppe, eines Haushaltskältegeräts verstanden werden. Insbesondere kann die Haushaltskältegerätevorrichtung auch das gesamte Haushaltskältegerät umfassen. Besonders vorteilhaft ist das Haushaltskältegerät dazu vorgesehen, in wenigstens einem Betriebszustand Kühlgut, insbesondere Lebensmittel wie beispielsweise Getränke, Fleisch, Fisch, Milch und/oder Milchprodukte, zu kühlen, insbesondere um eine längere Haltbarkeit der Kühlgüter zu bewirken. Bei dem Haushaltskältegerät kann es sich insbesondere um eine Kühltruhe und vorteilhaft um einen Kühl- und/oder Gefrierschrank handeln.

Insbesondere weist die Haushaltskältegerätevorrichtung nach Anspruch 1 einen Gerätekorpus auf. Unter einem "Gerätekorpus" soll insbesondere eine Einheit verstanden werden, die in wenigstens einem montierten Zustand einen Teil, insbesondere einen Großteil, einer äußeren Begrenzung, insbesondere eines Gehäuses, vorteilhaft eines Haushaltskältegerätegehäuses, ausbildet. Der Gerätekorpus weist insbesondere ein Außengehäuse und einen Innerliner auf, welcher innerhalb des Außengehäuses angeordnet ist. Der Innerliner dient einer äußeren Begrenzung zumindest eines Kälteraums, insbesondere eines Kühlraums und/oder eines Gefrierraums. Der Gerätekorpus weist insbesondere zumindest eine Seitenwand, insbesondere zumindest zwei Seitenwände, und/oder zumindest eine Rückwand und/oder zumindest eine Deckenwand und/oder zumindest eine Bodenwand auf. Insbesondere weist die Haushaltskältegerätevorrichtung einen Isolationsraum auf. Unter einem "Isolationsraum" soll insbesondere ein Raum zwischen dem Innerliner und dem Außengehäuse verstanden werden, welcher insbesondere in wenigstens einem montierten Zustand wenigstens teilweise, vorteilhaft wenigstens zu einem Großteil und besonders bevorzugt vollständig mit zumindest einem thermisch isolierenden Material, vorteilhaft mit zumindest einem thermisch isolierenden Schaum, gefüllt ist, um insbesondere eine thermische Abkopplung zwischen dem Kälteraum und einer Umgebung zu gewährleisten. Unter "wenigstens zu einem Großteil" soll insbesondere zu einem Anteil, insbesondere einem Massenanteil und/oder Volumenanteil, von mindestens 70 %, insbesondere von mindestens 80 %, vorteilhaft von mindestens 90 % und vorzugsweise von mindestens 95 % verstanden werden.

Die Haushaltskältegerätevorrichtung nach Anspruch 1 weist insbesondere einen Maschinenraum auf. Der Maschinenraum ist insbesondere zu einer Aufnahme von Kühlkreislaufkomponenten, wie beispielsweise eines Kompressors und/oder eines Ventils und/oder einer Elektronik und/oder eines Lüfters, vorgesehen. Der Maschinenraum ist, insbesondere ausgehend von einem geometrischen Mittelpunkt und/oder Schwerpunkt des Maschinenraums, insbesondere in zumindest einer Richtung offen und/oder unbegrenzt, um insbesondere eine Zugänglichkeit zu dem Maschinenraum zu ermöglichen und/oder zu gewährleisten. In einer Einbaulage ist der Maschinenraum insbesondere wenigstens zu einem Großteil unterhalb der Maschinenraumdeckwandung angeordnet.

Die Maschinenraumdeckwandung begrenzt insbesondere den Maschinenraum zumindest teilweise. Insbesondere verbindet die Maschinenraumdeckwandung in wenigstens einem montierten Zustand zwei Seitenwände und/oder eine Seitenwand und die Rückwand. Die Maschinenraumdeckwandung kann eine gesamte den Maschinenraum begrenzende Wandung ausbilden. Beispielsweise könnte das Wandelement zumindest einen Abschnitt einer Seitenwand und/oder einer Rückwand und/oder einer Deckenwand und/oder einer Bodenwand des Gerätekorpus ausbilden. In wenigstens einem montierten Zustand ist die Maschinenraumdeckwandung wenigstens abschnittsweise in Kontakt mit dem thermisch isolierenden Material angeordnet. Insbesondere ist das Wandelement als eine den Isolationsraum wenigstens teilweise begrenzende Bodenwand und/oder als eine einen Maschinenraum teilweise begrenzende Deckenwand ausgebildet. Die Maschinenraumdeckwandung verhindert vorteilhaft eine Flammenausbreitung in Richtung des Isolierraums.

Die Haushaltskältegerätevorrichtung nach Anspruch 1 weist vorteilhaft zumindest zwei Seitenwandbauteile auf. Unter einem "Seitenwandbauteil" soll insbesondere ein an der Seitenwand befestigtes Bauteil und/oder ein Teil der Seitenwand verstanden werden. Das Seitenwandbauteil ist insbesondere dazu vorgesehen, zumindest teilweise eine mechanische, insbesondere eine kraftschlüssige und/oder stoffschlüssige und/oder formschlüssige, Verbindung zwischen der Seitenwand und der Maschinenraumdeckwandung herzustellen. Das Seitenwandbauteil fixiert die Maschinenraumdeckwandung wenigstens im Wesentlichen relativ zu der Seitenwand. Das Seitenwandbauteil ist insbesondere an einer Seitenwand angeordnet, welche insbesondere Teil des Gerätekorpus der Haushaltskältegerätevorrichtung ist. Insbesondere ist das Seitenwandbauteil mittels einer Rastverbindung, Schraubverbindung oder Druckfügung an der Seitenwand befestigt. Das Seitenwandbauteil könnte alternativ einstückig mit der Seitenwand verbunden sein und/oder als ein Teil der Seitenwand ausgebildet sein. Das Seitenwandbauteil kann einteilig ausgebildet sein. Vorzugsweise ist das Seitenwandbauteil aus Kunststoff, insbesondere in einem Spritzgussverfahren hergestellt Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling.

Unter einem "Bereich zwischen dem Seitenwandbauteil und der Maschinenraumdeckwandung" soll ein Volumen zwischen dem Seitenwandbauteil und der Maschinenraumdeckwandung verstanden werden. Vorteilhaft soll darunter ein Volumen zwischen einer einen Randbereich der Maschinenraumdeckwandung umlaufenden Fläche zu dem Seitenwandbauteil verstanden werden. In einem montierten Zustand beträgt ein Abstand zwischen dem Seitenwandbauteil und der Maschinenraumdeckwandung beispielsweise maximal 20 mm, insbesondere maximal 15 mm, vorteilhaft maximal 10 mm, besonders vorteilhaft maximal 5 mm, vorzugsweise maximal 3 mm und besonders bevorzugt maximal 1 mm.

Vorteilhaft dichtet das Dichtelement den Bereich zwischen dem Seitenwandbauteil und der Maschinenraumdeckwandung spaltfrei ab. Darunter, dass das Dichtelement zumindest einen Bereich zwischen dem Seitenwandbauteil und der Maschinenraumdeckwandung "abdichtet" soll insbesondere verstanden werden, dass das Dichtelement dazu vorgesehen ist, einen Materialfluss, insbesondere des thermisch isolierenden Materials, von dem Isolierraum in den Maschinenraum insbesondere während eines Ausschäumvorgangs des Isolierraums zu verhindern. Insbesondere schützt das Dichtelement den Maschinenraum vor einem Eindringen von thermisch isolierendem Material und/oder anderen Materialien während des Ausschäumvorgangs. Insbesondere ist das Dichtelement dazu vorgesehen, während des Einbringens des thermisch isolierenden Materials in den Isolierraum, insbesondere während des Ausschäumens, zusammen mit der Maschinenraumdeckwandung eine Schaumbarriere bereitzustellen.

Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Beispielsweise könnte die Maschinenraumdeckwandung biegsam ausgebildet sein. Wenn die Maschinenraumdeckwandung jedoch wesentlich biegesteif ausgebildet ist, kann insbesondere eine hohe mechanische Stabilität erreicht werden, wodurch insbesondere auf ein zusätzliches, insbesondere der Stabilität dienendes, Bauteil, insbesondere auf eine Schäumtraverse, verzichtet werden kann. Unter der Wendung, dass die Maschinenraumdeckwandung "wesentlich biegesteif ausgebildet ist" soll insbesondere verstanden werden, dass unter einer mechanischen Beanspruchung, insbesondere bei einer Montage der Maschinenraumdeckwandung und/oder während eines Ausschäumvorgangs, keine sichtbare Verformung der Maschinenraumdeckwandung stattfindet, bei welcher sich - im Gegensatz zu einer unidirektionalen Kompression oder Ausdehnung des Bauteils - eine Krümmung der Maschinenraumdeckwandung bezüglich einer Erstreckungsrichtung verändert. Insbesondere soll darunter verstanden werden, dass unter einer mechanischen Beanspruchung der Maschinenraumdeckwandung eine Krümmung der Maschinenraumdeckwandung bezüglich einer Haupterstreckungsrichtung maximal 10%, vorteilhaft maximal 5%, besonders vorteilhaft maximal 3%, vorzugsweise maximal 1% und besonders bevorzugt maximal 0,5% beträgt. Unter einer "mechanischen Beanspruchung der Maschinenraumdeckwandung" soll insbesondere ein auf die Maschinenraumdeckwandung wirkendes Biegemodul verstanden werden.

Vorteilhaft ist die Maschinenraumdeckwandung wesentlich feuerfest ausgebildet. Unter der Wendung, dass die Maschinenraumdeckwandung "wesentlich feuerfest ausgebildet ist" soll insbesondere verstanden werden, dass die Maschinenraumdeckwandung von einem nichtbrennbaren Werkstoff und/oder Werkstoffen gebildet ist. Insbesondere ist die Maschinenraumdeckwandung dazu vorgesehen, Temperatur von mindestens 400°C, vorteilhaft mindestens 600°C, besonders vorteilhaft mindestens 800°C, vorzugsweise mindestens 1000°C und besonders bevorzugt mindestens 1200°C zu widerstehen und insbesondere in Flammen aufzugehen. Insbesondere ist die Maschinenraumdeckwandung vor einem Brand von insbesondere Kühlkreislaufkomponenten, wie beispielsweise eines Kompressors und/oder einer Elektronik und/oder eines Lüfters, geschützt und/oder schützt den Isolierraum. Durch eine derartige Ausgestaltung kann insbesondere eine hohe Brandsicherheit erreicht werden. Vorteilhaft kann dadurch zumindest eine Norm erfüllt und/oder eine normgerechte Haushaltskältegerätevorrichtung bereitgestellt werden.

Die Maschinenraumdeckwandung könnte, wie insbesondere aus dem Stand der Technik bekannt, aus einer beschichteten, insbesondere metallisch beschichteten, Pappe bestehen. Alternativ oder zusätzlich könnte die Maschinenraumdeckwandung beispielsweise aus einem Kunststoff bestehen. Vorzugsweise besteht die Maschinenraumdeckwandung wenigstens zu einem Großteil und insbesondere vollständig aus Metall. Besonders bevorzugt besteht die Maschinenraumdeckwandung zumindest zu einem Großteil und insbesondere vollständig aus einem verzinkten Stahlblech. Insbesondere ist die Maschinenraumdeckwandung von einem verzinkten Stahlblech mit einer Materialstärke von maximal 2 mm, vorteilhaft maximal 1 mm, besonders vorteilhaft maximal 0,6 mm und vorzugsweise maximal 0,5 mm gebildet. Insbesondere ist die Maschinenraumdeckwandung von einem verzinkten Stahlblech mit einer Materialstärke von mindestens 0,1 mm, vorteilhaft mindestens 0,2 mm, besonders vorteilhaft mindestens 0,3 mm und vorzugsweise mindestens 0,4 mm gebildet. Hierdurch kann eine besonders stabile Maschinenraumdeckwandung bereitgestellt werden. Insbesondere können hierdurch vorteilhafte Eigenschaften hinsichtlich des Brandschutzes der Maschinenraumdeckwandung erreicht werden.

Ferner wird vorgeschlagen, dass das Dichtelement die Maschinenraumdeckwandung zumindest teilweise umgreift. Darunter, dass das Dichtelement die Maschinenraumdeckwandung "zumindest teilweise umgreift" soll insbesondere verstanden werden, dass sich das Dichtelement in einem Randbereich der Maschinenraumdeckwandung von einer dem Maschinenraum zugewandten Fläche der Maschinenraumdeckwandung zumindest bis zu einer dem Isolierraum zugewandten Fläche erstreckt, und zwar vorzugsweise einstückig. Das Dichtelement kann demnach in einem montierten Zustand ein zumindest im Wesentlichen U-förmiges Profil aufweisen. Insbesondere kann dadurch eine vorteilhafte Abdichtung erreicht werden. Zudem kann dadurch eine insbesondere vereinfachte Montage der Haushaltskältegerätevorrichtung erzielt werden.

Zudem wird vorgeschlagen, dass das Seitenwandbauteil zumindest einen Aufnahmebereich für die Maschinenraumdeckwandung und zumindest ein Führungselement aufweist, welches dazu vorgesehen ist, die Maschinenraumdeckwandung bei einer Montage in den Aufnahmebereich zu führen. Der Aufnahmebereich ist dazu vorgesehen, insbesondere die Maschinenraumdeckwandung, insbesondere wenigstens einen Randbereich der Maschinenraumdeckwandung in zumindest einem montierten Zustand zumindest teilweise aufzunehmen. Der Aufnahmebereich ist insbesondere als eine Nut ausgebildet. Das Führungselement ist insbesondere als eine Auflagefläche ausgebildet. Insbesondere ist das Führungselement als eine direkt an den Aufnahmebereich angeordnete und einstückig mit dem Aufnahmebereich verbundene Auflagefläche ausgebildet. Vorteilhaft ist das Führungselement als eine einstückig an den Aufnahmebereich angeformte Verlängerung einer von zwei Schenkeln des Aufnahmebereichs ausgebildet. Unter der Wendung, dass das Führungselement dazu vorgesehen ist, die Maschinenraumdeckwandung bei einer Montage "in den Aufnahmebereich zu führen" soll insbesondere verstanden werden, dass das Führungselement insbesondere eine Führungskraft bereitstellt, welche bei einer Montage auf die Maschinenraumdeckwandung wirkt. Der Ausdruck "Führungskraft" soll hier insbesondere eine Kraft definieren, die dazu vorgesehen ist, die Maschinenraumdeckwandung an einer Bewegung in zumindest eine Richtung zu hindern und/oder die Maschinenraumdeckwandung bei einer Bewegung in eine mittels einer Einwirkung der Kraft auf die Maschinenraumdeckwandung vorgegebene Richtung zu halten. Durch eine derartige Ausgestaltung kann insbesondere eine besonders einfache Montage erreicht werden. Insbesondere kann ein besonders einfaches Handling der Maschinenraumdeckwandung erreicht werden.

Beispielsweise könnte das Dichtelement als ein elastisches Dichtprofil und/oder als ein Gummiprofil ausgebildet sein. Alternativ oder zusätzlich könnte das Dichtelement als ein Keder, insbesondere als ein Kederprofil ausgebildet sein und/oder beispielsweise aus Gummi und/oder Kautschuk gebildet sein. Alternativ oder zusätzlich könnte das Dichtelement beispielsweise von einem Schaumstoff gebildet sein. Alternativ oder zusätzlich könnte das Dichtelement aus Silikon gebildet sein und insbesondere als eine Silikonraupe ausgebildet sein. Vorteilhaft ist das Dichtelement als ein Dichtschaum ausgebildet, wodurch insbesondere ein besonders kostengünstiges Dichtelement bereitgestellt werden kann. Vorteilhaft ist das Dichtelement zumindest im Wesentlichen von einem Polyurethanschaum gebildet. Vorzugsweise ist der Dichtschaum dazu vorgesehen, direkt in den Aufnahmebereich eingeschäumt zu werden.

Erfindungsgemäß ist vorgesehen, dass die Maschinenraumdeckwandung zumindest ein Rastelement aufweist, welches mit einem korrespondierenden Rastelement des Seitenwandbauteils verrastet ist. Hierdurch kann eine vorteilhafte Montage, insbesondere eine vorteilhafte Vormontage, erreicht werden.

Beispielsweise könnte die Maschinenraumdeckwandung an einer Rückwand und/oder einer Bodenplatte der Haushaltskältegerätevorrichtung befestigt sein. Ferner geht die Erfindung aus von einem Verfahren nach Anspruch 11 zur Montage einer Haushaltskältegerätevorrichtung, welche zumindest ein Seitenwandbauteil und zumindest eine Maschinenraumdeckwandung aufweist.

Es wird vorgeschlagen, dass zumindest ein Bereich zwischen dem Seitenwandbauteil und der Maschinenraumdeckwandung mittels eines Dichtelements abgedichtet wird. Hierdurch kann insbesondere eine Montage vereinfacht werden. Insbesondere können Eigenschaften der Haushaltskältegerätevorrichtung bezüglich der Sicherheit, insbesondere hinsichtlich des Brandschutzes, verbessert werden.

Darunter, dass ein Bereich zwischen dem Seitenwandbauteil und der Maschinenraumdeckwandung "mittels eines Dichtelements abgedichtet wird" soll verstanden werden, dass in zumindest einem Montageschritt ein Dichtelement in einem Bereich zwischen der Maschinenraumdeckwandung und dem Seitenwandbauteil angeordnet wird. Vorteilhaft wird das Dichtelement an der Maschinenraumdeckwandung und/oder in den Aufnahmebereich des Seitenwandbauteils angebracht, bevor die Maschinenraumdeckwandung mit dem Seitenwandbauteil und/oder einer Seitenwand verbunden wird. Beispielsweise könnte in zumindest einem Montageschritt das Dichtelement an der Maschinenraumdeckwandung, insbesondere an einem Randbereich der Maschinenraumdeckwandung, angebracht werden. Vorteilhaft könnte ein insbesondere als ein Keder ausgestaltetes Dichtelement insbesondere an einem Randbereich der Maschinenraumdeckwandung angebracht werden. Insbesondere könnte das als ein Keder ausgestaltete Dichtelement insbesondere eine U-profilförmige Gestalt aufweisen und insbesondere auf den Randbereich der Maschinenraumdeckwandung gedrückt werden, beispielsweise in einem Vormontageschritt, insbesondere einem automatisierten Vormontageschritt. Besonders vorteilhaft könnte ein als ein Dichtschaum ausgestaltetes Dichtelement in den Aufnahmebereich des Seitenwandbauteils eingebracht werden, beispielsweise in einem Vormontageschritt, insbesondere einem automatisierten Spritzvorgang. Durch eine derartige Montage der Haushaltskältegerätevorrichtung kann insbesondere ein Montageaufwand verringert werden. Insbesondere können hierdurch insbesondere geringe Montagezeiten und/oder geringe Personalkosten erzielt werden. Insbesondere zusätzlich kann eine verbesserte Dichtwirkung erzielt werden.

Ferner wird vorgeschlagen, dass die Maschinenraumdeckwandung mit dem Seitenwandbauteil verbunden wird. Unter der Wendung, dass "die Maschinenraumdeckwandung mit dem Seitenwandbauteil verbunden wird", soll verstanden werden, dass das die Maschinenraumdeckwandung in zumindest einem Montageschritt über zumindest einen Kraftschluss und/oder zumindest einen Formschluss mit dem Seitenwandbauteil verbunden wird, nämlich durch eine Rastverbindung.

Beispielsweise könnte das Dichtelement auf die Maschinenraumdeckwandung gedrückt werden. Vorteilhaft wird die Maschinenraumdeckwandung in das Dichtelement gedrückt. Darunter, dass "die Maschinenraumdeckwandung in das Dichtelement gedrückt wird", soll insbesondere verstanden werden, dass die Maschinenraumdeckwandung relativ zu dem Dichtelement bewegt wird, insbesondere in Richtung des Dichtelements. Beispielsweise könnte sich dadurch das Dichtelement verformen. Vorteilhaft wird dadurch, dass die Maschinenraumdeckwandung in das Dichtelement gedrückt wird, ein Bereich zwischen dem Seitenwandbauteil und der Maschinenraumdeckwandung mit dem Dichtelement insbesondere spaltfrei ausgefüllt. Hierdurch kann insbesondere eine Anzahl von Montageschritten verringert werden. Insbesondere können durch eine derartige Montage etwaige Fertigungstoleranzen ausgeglichen werden.

Die Haushaltskältegerätevorrichtung soll hierbei nicht auf die oben beschriebene Anwendung und Ausführungsform beschränkt sein.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination.

Es zeigen:
- Fig. 1: ein Haushaltskältegerät mit einer Haushaltskältegerätevorrichtung in einer Vorderansicht,
- Fig. 2: einen Teil der Haushaltskältegerätevorrichtung mit zumindest einem Seitenwandbauteil und zumindest einem Dichtelement in einem vormontierten Zustand in einer Rückansicht,
- Fig. 3: einen Teil der Haushaltskältegerätevorrichtung mit einer Maschinenraumdeckwandung in einer Rückansicht,
- Fig. 4: ein Seitenwandbauteil in einer Einzeldarstellung,
- Fig. 5: die Maschinenraumdeckwandung in einer Einzeldarstellung,
- Fig. 6: ein Teil der Haushaltskältegerätevorrichtung in einer Schnittdarstellung,
- Fig. 7: ein Flussdiagramm eines Verfahrens zur Montage der Haushaltskältegerätevorrichtung,
- Fig. 8: einen Verfahrensschritt des Verfahrens zur Montage der Haushaltskältegerätevorrichtung,
- Fig. 9: einen weiteren Verfahrensschritt des Verfahrens zur Montage der Haushaltskältegerätevorrichtung,
- Fig. 10: einen weiteren Verfahrensschritt des Verfahrens zur Montage der Haushaltskältegerätevorrichtung,
- Fig. 11: einen weiteren Verfahrensschritt des Verfahrens zur Montage der Haushaltskältegerätevorrichtung und
- Fig. 12: ein Teil eines alternativen Ausführungsbeispiels der Haushaltskältegerätevorrichtung in einer Schnittdarstellung.

Von mehrfach vorhandenen Objekten ist in den Figuren jeweils lediglich eines mit einem Bezugszeichen versehen.

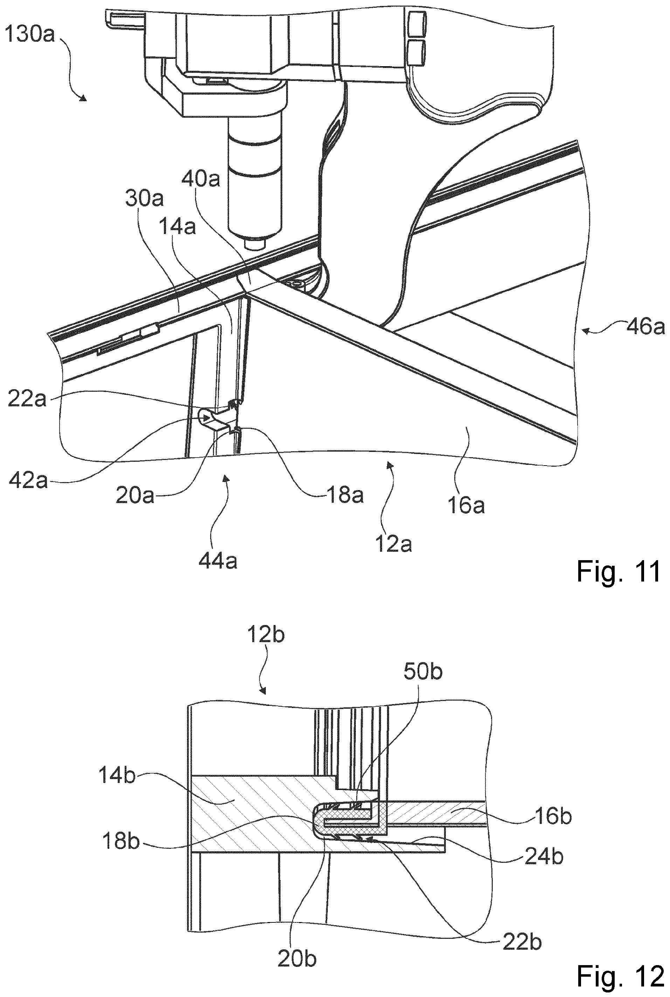

Dabei zeigt die Figur 11 ein Beispiel, das nicht ein Teil der vorliegenden Erfindung ist.

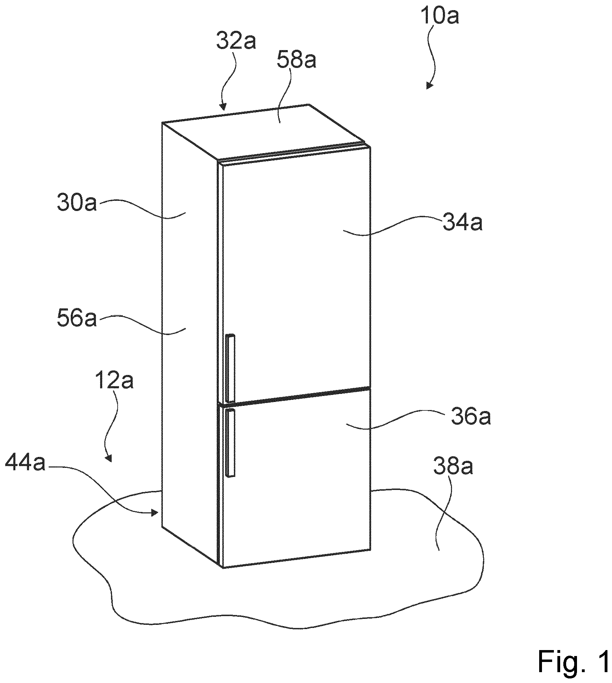

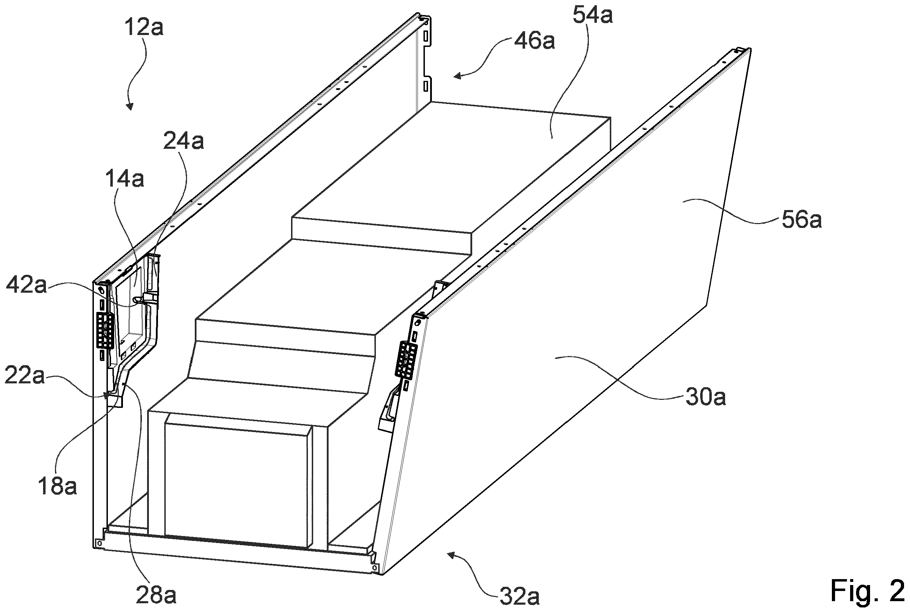

Fig. 1 zeigt ein Haushaltskältegerät 10a, welches als ein Kühl-Gefrier-Kombinationsgerät ausgebildet ist. Das Haushaltskältegerät 10a weist eine Haushaltskältegerätevorrichtung 12a nach Anspruch 1 auf. Die Haushaltskältegerätevorrichtung 12a weist einen Gerätekorpus 32a auf. Der Gerätekorpus 32a weist ein Außengehäuse 56a und einen Innerliner 54a auf (vgl. auch Figur 2). Der Gerätekorpus 32a weist zwei Seitenwände 30a, eine Deckenwand 58a, eine Rückwand und eine Bodenwand (nicht dargestellt) auf.

Der Innerliner 54a definiert teilweise einen Kälteraum (nicht dargestellt). Der Kälteraum ist als ein Kühlraum ausgebildet. Die Haushaltskältegerätevorrichtung 12a weist eine Gerätetür 34a auf. Die Gerätetür 34a ist schwenkbar relativ zu dem Gerätekorpus 32a gelagert. In einem geschlossenen Zustand verschließt die Gerätetür 32a den Kälteraum.

Der Innerliner 54a definiert teilweise einen weiteren Kälteraum (nicht dargestellt). Der weitere Kälteraum ist als ein Gefrierraum ausgebildet. Die Haushaltskältegerätevorrichtung 12a weist eine weitere Gerätetür 36a auf. Die weitere Gerätetür 36a ist schwenkbar relativ zu dem Gerätekorpus 32a gelagert. In einem geschlossenen Zustand verschließt die weitere Gerätetür 36a den weiteren Kälteraum. Der weitere Kälteraum ist in einer Einbaulage bezüglich einer Vertikalrichtung unterhalb des Kälteraums angeordnet. Jedoch wären auch eine andere Anzahl und Anordnung von Kälteräumen denkbar. In einer Einbaulage ist der Gerätekorpus 32a auf einer Aufstellfläche 38a aufgestellt.

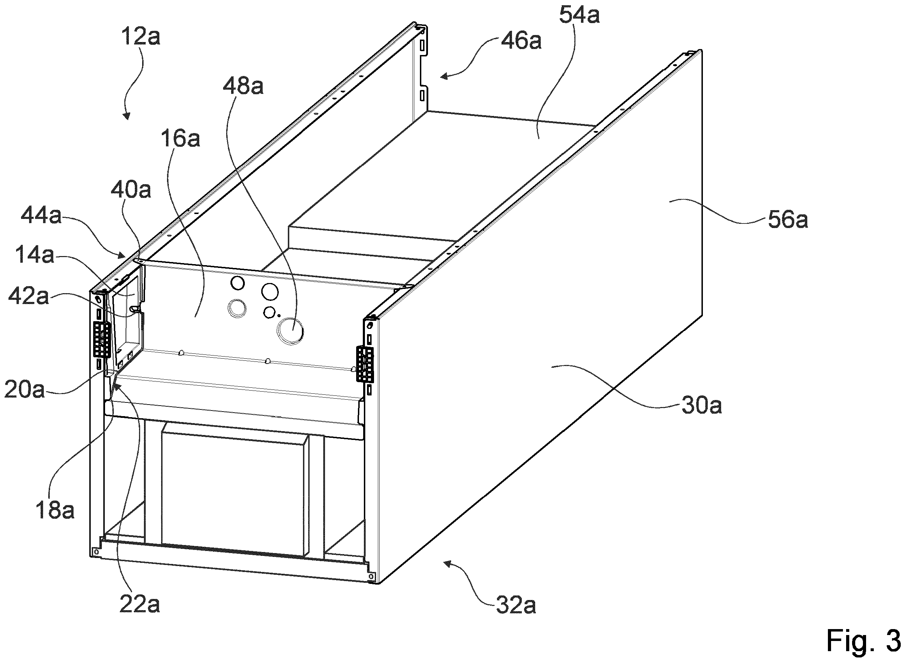

Figur 2 zeigt einen Teil der Haushaltskältegerätevorrichtung in einem vormontierten Zustand. Die Haushaltskältegerätevorrichtung 12a weist zwei Seitenwandbauteile 14a und eine Maschinenraumdeckwandung 16a auf (vgl. Figuren 2 und 3). Zudem weist die Haushaltskältegerätevorrichtung 12a einen Maschinenraum 44a auf, welcher dazu vorgesehen ist, insbesondere einen Kompressor und/oder andere Komponenten eines Kühlkreislaufs der Haushaltskältegerätevorrichtung aufzunehmen. Die Maschinenraumdeckwandung 16a definiert den Maschinenraum 44a teilweise und zwar zumindest nach oben hin. Die Haushaltskältegerätevorrichtung 12a weist einen Isolierraum 46a auf. Die Maschinenraumdeckwandung 16a trennt den Maschinenraum von dem Isolierraum 46a. Die Seitenwandbauteile 14a sind jeweils an einer der Seitenwände 30a angeordnet. Das Seitenwandbauteil 14a ist mit der jeweiligen Seitenwand 30a verrastet.

Die Maschinenraumdeckwandung 16a ist an jeweils den beiden Seitenwänden 30a befestigt (vgl. Figur 3). Die Maschinenraumdeckwandung 16a weist eine Lasche 40a auf. In einem montierten Zustand liegt die Lasche 40a auf einer Kante der Seitenwand 30a auf. Im gezeigten Beispiel ist die Maschinenraumdeckwandung 16a jeweils an der Seitenwand 30a mittels einer Umformung der Lasche 40a der Maschinenraumdeckwandung 16a und der Seitenwand 30a befestigt.

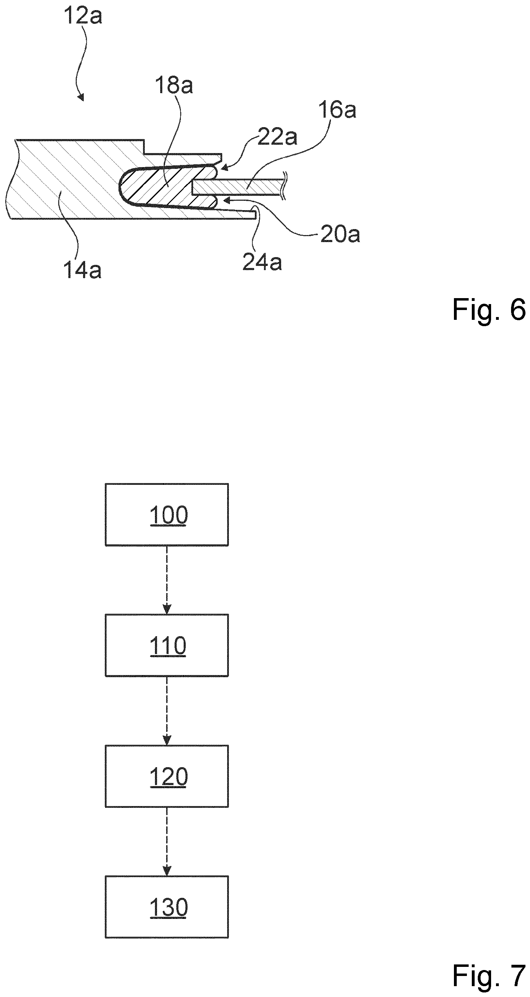

Die Haushaltskältegerätevorrichtung 12a weist ein Dichtelement 18a auf (vgl. auch Figur 2). Zwischen dem Seitenwandbauteil 14a und der Maschinenraumdeckwandung 16a weist die Haushaltskältegerätevorrichtung 12a in einem montierten Zustand einen Bereich 20a auf. Das Dichtelement 18a ist dazu vorgesehen, den Bereich 20a zwischen dem Seitenwandbauteil 14a und der Maschinenraumdeckwandung 16a in einem montierten Zustand abzudichten (vgl. auch Figur 6). Im gezeigten Ausführungsbeispiel ist das Dichtelement 18a als ein Dichtschaum ausgebildet (vgl. Figuren 2, 3 und 6). Das als ein Dichtschaum ausgebildete Dichtelement 18a umgreift die Maschinenraumdeckwandung 16a in einem Randbereich der Maschinenraumdeckwandung 16a (vgl. Figuren 3 und 6).

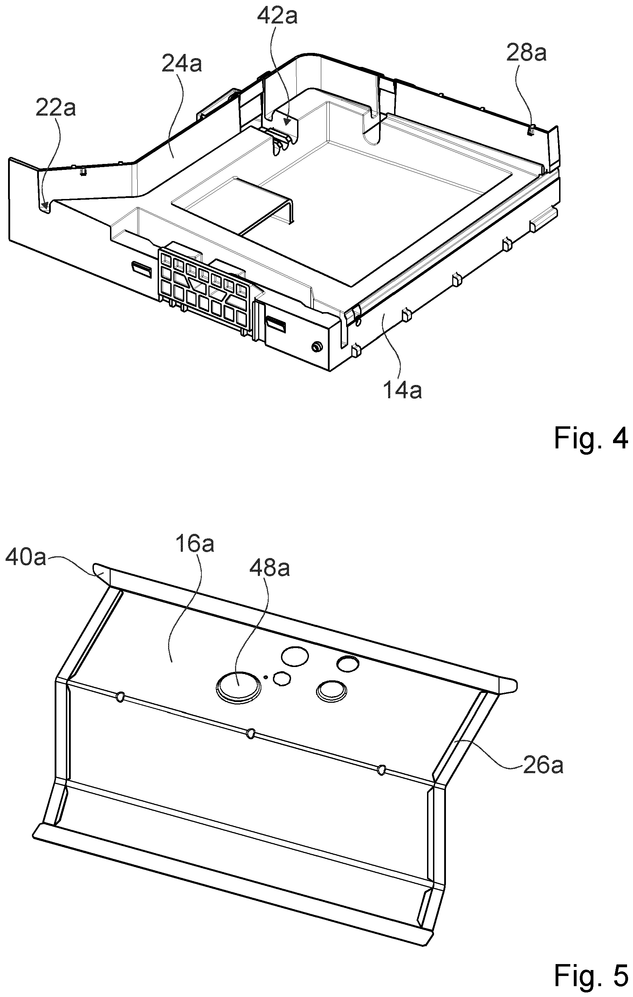

Figur 4 zeigt das Seitenwandbauteil 14a der Haushaltskältegerätevorrichtung 12a in einer perspektivischen Detailansicht. Das Seitenwandbauteil 14a ist als ein Kunststoffteil, im gezeigten Beispiel insbesondere als ein Kunststoffspritzgussteil, ausgebildet.

Das Seitenwandbauteil 14a weist einen Aufnahmebereich 22a auf, welcher dazu vorgesehen ist, die Maschinenraumdeckwandung 16a in einem montierten Zustand aufzunehmen. Der Aufnahmebereich 22a ist als eine Nut in dem Seitenwandbauteil 14a ausgebildet. Das Seitenwandbauteil 14a weist ein Führungselement 24a auf, welches dazu vorgesehen ist, die Maschinenraumdeckwandung 16a bei einer Montage in den Aufnahmebereich 22a zu führen. Das Führungselement 24a ist als eine Führungsfläche, welche durch eine Verlängerung eines Schenkels des als Nut ausgebildeten Aufnahmebereichs 22a entsteht, gebildet.

Ferner weist das Seitenwandbauteil 14a vier Durchführungen 42a auf. Die Durchführung 42a ist dazu vorgesehen, zumindest ein Kabel und/oder zumindest ein Rohr aufzunehmen, insbesondere zur Durchführung von dem Maschinenraum 44a in den Isolierraum 46a. Die Durchführung 42a ist als eine Nut in dem Seitenwandbauteil 14a gebildet. Ferner weist das Seitenwandbauteil 14a zwei korrespondierende Rastelemente 28a auf, welche im gezeigten Beispiel insbesondere als Nippel ausgebildet und einstückig mit dem Seitenwandbauteil 14a ausgeformt sind.

Die Maschinenraumdeckwandung 16a weist sechs Rastelemente 26a auf, welche zu den korrespondierenden Rastelementen 28a des Seitenwandbauteils 14a korrespondieren (vgl. Figur 5). In einem montierten Zustand ist das Rastelement 26a dazu vorgesehen, mit dem korrespondierenden Rastelement 28a des Seitenwandbauteils 14a verrastet zu sein (vgl. auch Figuren 3 und 5). Das Rastelement 26a ist einstückig mit der Maschinenraumdeckwandung 16a ausgebildet. Insbesondere ist das Rastelement 26a durch eine umgebogene Lasche der Maschinenraumdeckwandung 16a gebildet.

Die Maschinenraumdeckwandung 16a weist eine Mehrzahl von Ausnehmungen 48a auf. Zumindest eine Ausnehmung 48a ist dazu vorgesehen, in zumindest einem Montageschritt, den Isolierraum 46a füllendes Isoliermaterial durchzulassen. Insbesondere dient zumindest eine Ausnehmung 48a bei einem Ausschäumen des Isolierraums 46a als Schaumdurchlass. Zumindest eine weitere Ausnehmung 48a ist in einem montierten Zustand dazu vorgesehen, in dem Kälteraum kondensierendes Kondenswasser in den Maschinenraum 44a abzuleiten.

Die Maschinenraumdeckwandung 16a ist aus Metall gebildet. Im gezeigten Beispiel ist die Maschinenraumdeckwandung 16a insbesondere aus verzinktem Stahlblech gebildet. Die Maschinenraumdeckwandung 16a ist biegesteif ausgebildet. Insbesondere bei einem Ausschäumen des Isolierraums 46a in einem montierten Zustand der Haushaltskältegerätevorrichtung 10a ist die Maschinenraumdeckwandung 16a formstabil. Zudem ist die Maschinenraumdeckwandung 16a feuerfest ausgebildet. Insbesondere erfüllt die Maschinenraumdeckwandung 16a die Anforderungen der IEC 60335-2-24, insbesondere hinsichtlich des Brandschutzes.

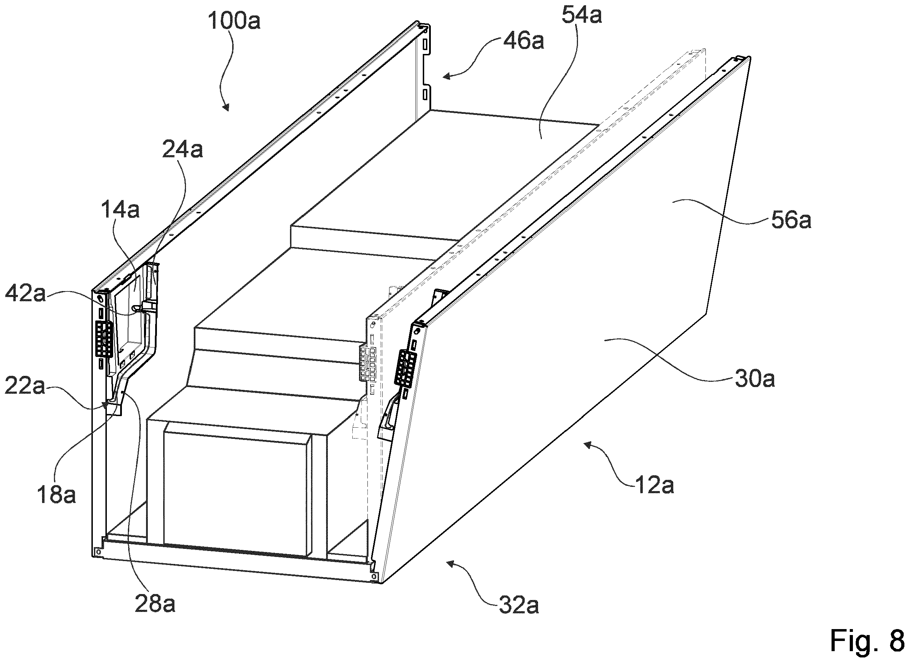

Figur 7 zeigt schematisch ein Verfahren nach Anspruch 11 zur Montage einer Haushaltskältegerätevorrichtung 12a, welche zumindest ein Seitenwandbauteil 14a und zumindest eine Maschinenraumdeckwandung 16a aufweist. Das Verfahren zur Montage der Haushaltsgerätevorrichtung 12a umfasst zumindest einen Montageschritt 100, 110, 120 und 130 (vgl. auch Figuren 8 bis 11).

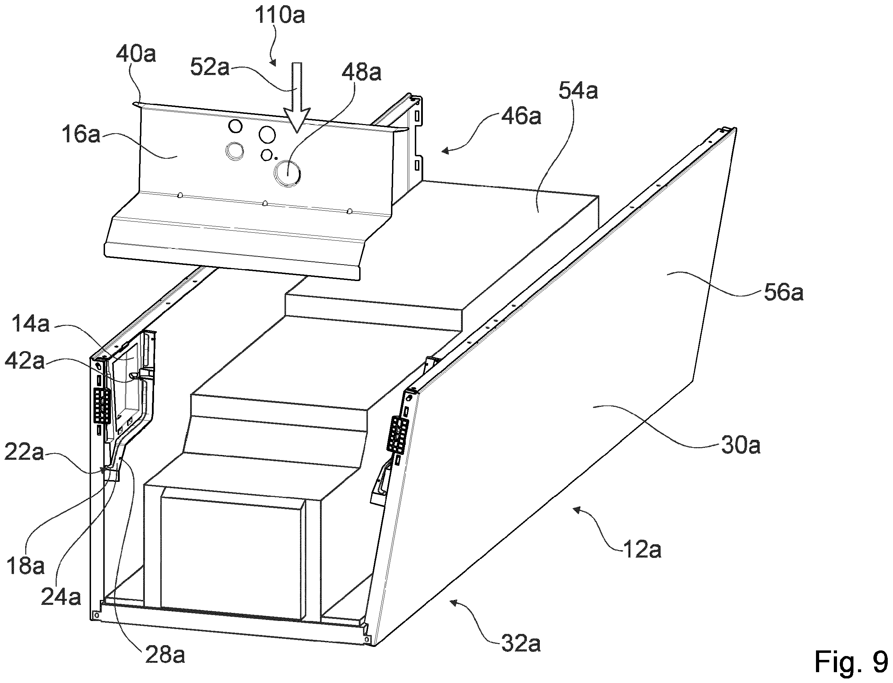

In dem Montageschritt 100a wird der Gerätekorpus 32a vormontiert (vgl. Figur 8). Insbesondere werden die Seitenwände 30a in eine Vormontageposition gebracht, wobei die Seitenwände 30a zueinander winklig angeordnet werden. Die Seitenwandbauteile 14a werden jeweils an der Seitenwand 30a montiert. Die Seitenwandbauteile 14a werden mit jeweils der Seitenwand 30a verrastet. Das Dichtelement 18a wird vormontiert. Hierzu wird das Dichtelement 18a, welches im gezeigten Beispiel als ein Dichtschaum ausgebildet ist, in den Aufnahmebereich 22a des Seitenwandbauteils 14a automatisiert eingespritzt. In dem Montageschritt 110a wird die Maschinenraumdeckwandung 16a in den vormontierten Gerätekorpus 32a eingelegt, was schematisch durch die Einlegrichtung 52a dargestellt ist (vgl. Figur 9). Die Maschinenraumdeckwandung 16a wird in Einlegrichtung 52a auf das Führungselement 24a gelegt.

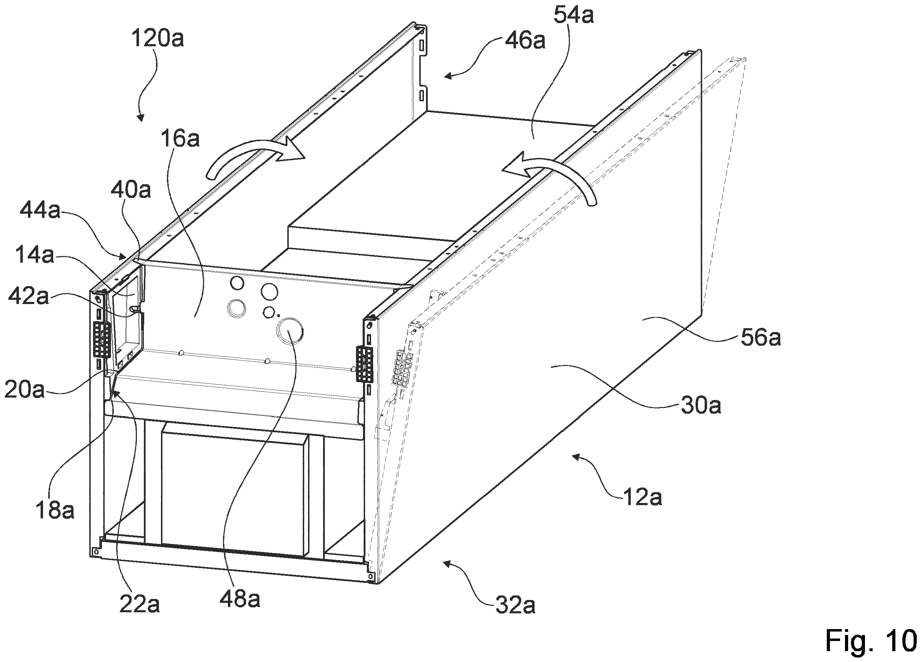

In dem Montageschritt 120 werden die Seitenwände 30a relativ zueinander zusammengedrückt, so dass diese in eine zueinander parallel ausgerichtete Position gebracht werden (vgl. Figur 10). Hierdurch wird die Maschinenraumdeckwandung 16a mit dem Seitenwandbauteil 14a verbunden, wodurch insbesondere die Haushaltskältegerätevorrichtung stabilisiert wird. Dabei verrastet die Maschinenraumdeckwandung 16a mit dem Seitenwandbauteil 14a. Dadurch, dass die Seitenwände 30a zueinander zusammengedrückt werden, wird die Maschinenraumdeckwandung 16a in das zwischen der Maschinenraumdeckwandung 16a und dem Seitenwandbauteil 14a angeordnete Dichtelement 18a gedrückt. Durch diesen Montageschritt 120a wird das Dichtelement 18a plastisch verformt. Somit wird in dem Montageschritt 120a den Bereich 20a zwischen dem Seitenwandbauteil 14a und der Maschinenraumdeckwandung 16a mittels des Dichtelements 18a ausgefüllt.

In dem Montageschritt 130a wird die Maschinenraumdeckwandung 16a mit zwei Seitenwänden 30a mittels eines Umformprozesses verbunden (vgl. Figur 11), was ein Beispiel darstellt, das nicht ein Teil der vorliegenden Erfindung ist. Der Umformprozess ist eine Durchsetzfügung.

In Figur 12 ist ein weiteres Ausführungsbeispiel der Erfindung gezeigt. Die nachfolgende Beschreibung beschränkt sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Figuren 1 bis 10 verwiesen werden kann. Zur Unterscheidung der Ausführungsbeispiele ist der Buchstabe a in den Bezugszeichen des Ausführungsbeispiels in den Figuren 1 bis 10 durch den Buchstaben b in den Bezugszeichen des Ausführungsbeispiels der Figuren 12 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Figuren 1 bis 10 verwiesen werden.

In dem in Figur 12 gezeigten Ausführungsbeispiel weist eine Haushaltskältegerätevorrichtung 12b nach Anspruch 1 ein Dichtelement 18b auf. Das Dichtelement 18b ist als ein Keder, insbesondere als ein Gummikeder ausgebildet. Das Dichtelement 18b weist eine Mehrzahl von insbesondere vier Dichtlippen 50b auf. Die Dichtlippen 50b sind dazu vorgesehen, eine Maschinenraumdeckwandung 16b zusätzlich in Seitenwandbauteilen 14b zu fixieren. Das Dichtelement 18b ist dazu vorgesehen, in zumindest einem Montageschritt an einem Randbereich der Maschinenraumdeckwandung 16b montiert zu sein.

Bei einer Montage der Haushaltskältegerätevorrichtung 12b wird in einem Montageschritt das als Keder ausgebildete Dichtelement 18b auf den Rand der Maschinenraumdeckwandung16b gesteckt. In einem darauffolgenden Montageschritt wird die Maschinenraumdeckwandung 16b zusammen mit dem bereits vormontierten Dichtelement 18b in das Seitenwandbauteil 14b, insbesondere in einen Aufnahmebereich 22b des Seitenwandbauteils 14b, eingeschoben. Insbesondere bei einem Ausschäumvorgang verformen sich die Dichtlippen 50b plastisch, wodurch die Dichtlippen 18b einen Bereich zwischen dem Seitenbauteil 14b und der Maschinenraumdeckwandung 16b abdichten.

### Bezugszeichen

- 10: Haushaltskältegerät
- 12: Haushaltskältegerätevorrichtung
- 14: Seitenwandbauteil
- 16: Maschinenraumdeckwandung
- 18: Dichtelement
- 20: Bereich
- 22: Aufnahmebereich
- 24: Führungselement
- 26: Rastelement
- 28: Korrespondierendes Rastelement
- 30: Seitenwand
- 32: Gerätekorpus
- 34: Gerätetür
- 36: Weitere Gerätetür
- 38: Aufstellfläche
- 40: Lasche
- 42: Durchführung
- 44: Maschinenraum
- 46: Isolierraum
- 48: Ausnehmung
- 50: Dichtlippe
- 52: Einlegrichtung
- 54: Innerliner
- 56: Außengehäuse
- 58: Deckenwand
- 100: Montageschritt
- 110: Montageschritt
- 120: Montageschritt
- 130: Montageschritt

## Patentansprüche

1. Haushaltskältegerätevorrichtung (12a-b) mit zumindest einem Seitenwandbauteil (14a-b) und mit zumindest einer Maschinenraumdeckwandung (16a-b), wobei die Haushaltskältegerätevorrichtung (12a-b) zumindest ein Dichtelement (18a-b) aufweist, welches zumindest einen Bereich (20a-b) zwischen dem Seitenwandbauteil (14a-b) und der Maschinenraumdeckwandung (16a-b) abdichtet, **dadurch gekennzeichnet, dass** die Maschinenraumdeckwandung (16a-b) zumindest ein Rastelement (26a-b) aufweist, welches mit einem korrespondierenden Rastelement (28a-b) des Seitenwandbauteils (14a-b) verrastet ist.

2. Haushaltskältegerätevorrichtung (12a-b) nach Anspruch 1, **dadurch gekennzeichnet, dass** die Maschinenraumdeckwandung (16a-b) wesentlich biegesteif ausgebildet ist.

3. Haushaltskältegerätevorrichtung (12a-b) nach Anspruch 1 oder 2, **dadurch gekennzeichnet, dass** die Maschinenraumdeckwandung (16a-b) wesentlich feuerfest ausgebildet ist.

4. Haushaltskältegerätevorrichtung (12a-b) nach einem der vorhergehenden Ansprüche, **dadurch gekennzeichnet, dass** die Maschinenraumdeckwandung (16a-b) zumindest zu einem Großteil aus Metall besteht.

5. Haushaltskältegerätevorrichtung (12a-b) nach einem der vorhergehenden Ansprüche, **dadurch gekennzeichnet, dass** das Dichtelement (18a-b) die Maschinenraumdeckwandung (16a-b) zumindest teilweise umgreift.

6. Haushaltskältegerätevorrichtung (12a-b) nach einem der vorhergehenden Ansprüche, **dadurch gekennzeichnet, dass** das Seitenwandbauteil (14a-b) zumindest einen Aufnahmebereich (22a-b) für die Maschinenraumdeckwandung (16ab) und zumindest ein Führungselement (24a-b) aufweist, welches dazu vorgesehen ist, die Maschinenraumdeckwandung (16a-b) bei einer Montage in den Aufnahmebereich (22a-b) zu führen.

7. Haushaltskältegerätevorrichtung (12a) nach einem der vorhergehenden Ansprüche, **dadurch gekennzeichnet, dass** das Dichtelement (18a) als ein Dichtschaum ausgebildet ist.

8. Haushaltskältegerätevorrichtung (12a-b) nach einem der vorhergehenden Ansprüche, **gekennzeichnet durch** zumindest eine Seitenwand (30a-b), an welcher die Maschinenraumdeckwandung (16a-b) befestigt ist.

9. Haushaltskältegerätevorrichtung (12a-b) nach Anspruch 8, **dadurch gekennzeichnet, dass** die Maschinenraumdeckwandung (16a-b) an der Seitenwand (30a-b) mittels einer Umformung der Maschinenraumdeckwandung (16a-b) und/oder der Seitenwand (30a-b) befestigt ist.

10. Haushaltskältegerät (10a-b), insbesondere Gefrier- und/oder Kühlgerät, mit zumindest einer Haushaltskältegerätevorrichtung (12a-b) nach einem der vorhergehenden Ansprüche.

11. Verfahren zur Montage einer Haushaltskältegerätevorrichtung (12a-b) nach einem der Ansprüche 1 bis 9, welche zumindest ein Seitenwandbauteil (14a-b) und zumindest eine Maschinenraumdeckwandung (16a-b) aufweist, wobei zumindest ein Bereich (20a-b) zwischen dem Seitenwandbauteil (14a-b) und der Maschinenraumdeckwandung (16a-b) mittels eines Dichtelements (18a-b) abgedichtet wird.

12. Verfahren nach Anspruch 11, **dadurch gekennzeichnet, dass** die Maschinenraumdeckwandung (16a-b) mit dem Seitenwandbauteil (14a-b) verbunden wird.

13. Verfahren nach Anspruch 11 oder 12, **dadurch gekennzeichnet, dass** die Maschinenraumdeckwandung (16a-b) in das Dichtelement (18a-b) gedrückt wird.

14. Verfahren nach einem der Ansprüche 11 bis 13, **dadurch gekennzeichnet, dass** die Maschinenraumdeckwandung (16a-b) mit zumindest einer Seitenwand (30a-b) mittels eines Umformprozesses verbunden wird.

## Claims

1. Household refrigeration appliance apparatus (12a-b) having at least one side wall component (14a-b) and at least one machine compartment top wall (16a-b), wherein the household refrigeration appliance apparatus (12a-b) has at least one sealing element (18a-b) which seals at least one region (20a-b) between the side wall component (14a-b) and the machine compartment top wall (16a-b), **characterised in that** the machine compartment top wall (16a-b) has at least one latching element (26a-b) which is latched with a corresponding latching element (28a-b) of the side wall component (14a-b).

2. Household refrigeration appliance apparatus (12a-b) according to claim 1, **characterised in that** the machine compartment top wall (16a-b) is designed to be essentially bend-resistant.

3. Household refrigeration appliance apparatus (12a-b) according to claim 1 or 2, **characterised in that** the machine compartment top wall (16a-b) is designed to be essentially fireproof.

4. Household refrigeration appliance apparatus (12a-b) according to one of the preceding claims, **characterised in that** the machine compartment top wall (16a-b) consists at least to a large extent of metal.

5. Household refrigeration appliance apparatus (12a-b) according to one of the preceding claims, **characterised in that** the sealing element (18a-b) grips around the machine compartment top wall (16a-b) at least in part.

6. Household refrigeration appliance apparatus (12a-b) according to one of the preceding claims, **characterised in that** the side wall component (14a-b) has at least one receiving region (22a-b) for the machine compartment top wall (16a-b) and at least one guiding element (24a-b) which is provided so as to guide the machine compartment top wall (16a-b) into the receiving region (22a-b) during an assembly.

7. Household refrigeration appliance apparatus (12a) according to one of the preceding claims, **characterised in that** the sealing element (18a) is designed as a sealing foam.

8. Household refrigeration appliance apparatus (12a-b) according to one of the preceding claims, **characterised by** at least one side wall (30a-b), to which the machine compartment top wall (16a-b) is attached.

9. Household refrigeration appliance apparatus (12a-b) according to claim 8, **characterised in that** the machine compartment top wall (16a-b) is attached to the side wall (30a-b) by means of deforming the machine compartment top wall (16a-b) and/or the side wall (30a-b).

10. Household refrigeration appliance (10a-b), in particular a freezer and/or a refrigerator, having at least one household refrigeration appliance apparatus (12a-b) according to one of the preceding claims.

11. Method for assembling a household refrigeration appliance apparatus (12a-b) according to one of claims 1 to 9, which has at least one side wall component (14a-b) and at least one machine compartment top wall (16a-b), wherein at least one region (20a-b) between the side wall component (14a-b) and the machine compartment top wall (16a-b) is sealed by means of a sealing element (18a-b).

12. Method according to claim 11, **characterised in that** the machine compartment top wall (16a-b) is connected to the side wall component (14a-b).

13. Method according to claim 11 or 12, **characterised in that** the machine compartment top wall (16a-b) is pressed into the sealing element (18a-b).

14. Method according to one of claims 11 to 13, **characterised in that** the machine compartment top wall (16a-b) is connected to at least one side wall (30a-b) by means of a deforming process.

## Revendications

1. Dispositif pour appareil de réfrigération domestique (12a-b) comprenant au moins un élément de paroi latérale (14a-b) et au moins une paroi de recouvrement du compartiment technique (16a-b), le dispositif pour appareil de réfrigération domestique (12a-b) comprenant au moins un élément d'étanchéité (18a-b), qui assure l'étanchéité d'au moins une zone (20a-b) entre l'élément de paroi latérale (14a-b) et la paroi de recouvrement du compartiment technique (16a-b), **caractérisé en ce que** la paroi de recouvrement du compartiment technique (16a-b) présente au moins un élément d'enclenchement (26a-b) qui est enclenché avec un élément d'enclenchement correspondant (28a-b) de l'élément de paroi latérale (14a-b).

2. Dispositif pour appareil de réfrigération domestique (12a-b) selon la revendication 1, **caractérisé en ce que** la paroi de recouvrement du compartiment technique (16a-b) est sensiblement rigide à la flexion.

3. Dispositif pour appareil de réfrigération domestique (12a-b) selon la revendication 1 ou 2, **caractérisé en ce que** la paroi de recouvrement du compartiment technique (16a-b) est sensiblement ignifuge.

4. Dispositif pour appareil de réfrigération domestique (12a-b) selon l'une quelconque des revendications précédentes, **caractérisé en ce que** la paroi de recouvrement du compartiment technique (16a-b) est constituée au moins en grande partie de métal.

5. Dispositif pour appareil de réfrigération domestique (12a-b) selon l'une des revendications précédentes, **caractérisé en ce que** l'élément d'étanchéité (18a-b) entoure au moins partiellement la paroi de recouvrement du compartiment technique (16a-b).

6. Dispositif pour appareil de réfrigération domestique (12a-b) selon l'une des revendications précédentes, **caractérisé en ce que** l'élément de paroi latérale (14a-b) présente au moins une zone de réception (22a-b) pour la paroi de recouvrement du compartiment technique (16a-b) et au moins un élément de guidage (24a-b) qui est prévu pour guider la paroi de recouvrement du compartiment technique (16a-b) dans la zone de réception (22a-b) lors d'un montage.

7. Dispositif pour appareil de réfrigération domestique (12a) selon l'une des revendications précédentes, **caractérisé en ce que** l'élément d'étanchéité (18a) est réalisé sous la forme d'une mousse d'étanchéité.

8. Dispositif pour appareil de réfrigération domestique (12a-b) selon l'une quelconque des revendications précédentes, **caractérisé par** au moins une paroi latérale (30a-b) sur laquelle est fixée la paroi de recouvrement du compartiment technique (16a-b).

9. Dispositif pour appareil de réfrigération domestique (12a-b) selon la revendication 8, **caractérisé en ce que** la paroi de recouvrement du compartiment technique (16a-b) est fixée à la paroi latérale (30a-b) au moyen d'une déformation de la paroi de recouvrement du compartiment technique (16a-b) et/ou de la paroi latérale (30a-b).

10. Appareil de réfrigération domestique (10a-b), en particulier appareil de congélation et/ou de réfrigération, comprenant au moins un dispositif pour appareil de réfrigération domestique (12a-b) selon l'une des revendications précédentes.

11. Procédé d'assemblage d'un dispositif pour appareil de réfrigération domestique (12a-b) selon l'une quelconque des revendications 1 à 9, comprenant au moins un élément de paroi latérale (14a-b) et au moins une paroi de recouvrement du compartiment technique (16a-b),
dans lequel au moins une zone (20a-b) entre l'élément de paroi latérale (14a-b) et la paroi de recouvrement du compartiment technique (16a-b) est rendue étanche au moyen d'un élément d'étanchéité (18a-b).

12. Procédé selon la revendication 11, **caractérisé en ce que** la paroi de recouvrement du compartiment technique (16a-b) est reliée à l'élément de paroi latérale (14a-b).

13. Procédé selon la revendication 11 ou 12, **caractérisé en ce que** la paroi de recouvrement du compartiment technique (16a-b) est pressée dans l'élément d'étanchéité (18a-b).

14. Procédé selon l'une des revendications 11 à 13, **caractérisé en ce que** la paroi de recouvrement du compartiment technique (16a-b) est reliée à au moins une paroi latérale (30a-b) au moyen d'un processus de formage.
